# FASCICULE DE BREVET EUROPEEN

(11) **EP 2 327 077 B1**
(45) Date de publication et mention de la délivrance du brevet: **05.09.2012**
(21) Numéro de dépôt: 09736872.4
(22) Date de dépôt: 22.09.2009
(51) Int. Cl.: G21C 3/62

(54) **PROCEDE DE PREPARATION D'UN COMBUSTIBLE NUCLEAIRE MIXTE COMPRENANT DE L'URANIUM ET AU MOINS UN ACTINIDE ET/OU LANTHANIDE METTANT EN OEUVRE UNE RESINE ECHANGEUSE DE CATIONS**
VERFAHREN ZUR HERSTELLUNG EINES MISCHKERNBRENNSTOFFS, DER URAN UND MINDESTENS EIN ACTINID UND/ODER LANTHANID ENTHÄLT UNTER VERWENDUNG EINES KATIONENAUSTAUSCHHARZES
METHOD FOR PREPARING A MIXED NUCLEAR FUEL CONTAINING URANIUM AND AT LEAST ONE ACTINIDE AND/OR LANTHANIDE USING A CATION-EXCHANGE RESIN

(30) Priorité: 23.09.2008 FR 0856388
(43) Date de publication de la demande: 01.06.2011
(73) Titulaire: Commissariat à l'Énergie Atomique et aux Énergies Alternatives, 75015 Paris (FR)
(72) Inventeur: PICART, Sébastien, F-30400 Villeneuve Les Avignon (FR); MOKHTARI, Hamid, F-27100 VAL-DE-REUIL (FR); JOBELIN, Isabelle, F-84810 Aubignan (FR)
(74) Mandataire: Ilgart, Jean-Christophe
(86) Numéro de dépôt international: PCT/EP2009/062267
(87) Numéro de publication internationale: WO 2010/034716

(56) Documents cités:
- DE-A1- 2 527 095
- US-A- 3 880 769
- US-A- 4 036 920

## Description

### DOMAINE TECHNIQUE

L'invention a trait à un procédé de préparation d'un combustible mixte, à savoir comprenant à la fois de l'uranium et au moins un actinide, en particulier, un actinide mineur et/ou un lanthanide mettant en oeuvre une résine échangeuse de cations.

Ce procédé peut trouver son application dans la conception de nouveaux combustibles nucléaires pouvant être utilisés pour constituer des crayons nucléaires destinés à de nombreux types de réacteurs nucléaires ou pour constituer des cibles de transmutation, en vue d'effectuer des expériences de transmutation nucléaire notamment pour recycler des éléments à longue vie comme les actinides mineurs.

### ÉTAT DE LA TECHNIQUE ANTÉRIEURE

De façon générale, un combustible nucléaire, utilisé dans le coeur d'un réacteur nucléaire, a pour rôle de fournir de l'énergie sous forme de chaleur par fission de radionucléides, en particulier l'uranium, le plutonium, le thorium, suite à un bombardement neutronique.

Parmi les combustibles mis au point dans les années précédentes, on peut citer:
- des combustibles simples, c'est-à-dire comprenant un seul élément radioactif, par exemple, des oxydes simples, tels que UO₂;
- des combustibles mixtes, c'est-à-dire comprenant au moins deux éléments radioactifs, tels que des oxydes mixtes à base d'uranium et de thorium ou encore les oxydes mixtes du type MOX à base d'uranium et de plutonium.

Les combustibles simples du type UO₂ sont obtenus classiquement par un procédé comprenant les étapes suivantes :
- une étape d'extraction de minerais comprenant de l'uranium à l'état métallique ;
- une étape de concassage et broyage des minerais extraits suivie d'une étape de dissolution du minerai, par voie alcaline ou acide, pour en extraire l'uranium ;
- une étape de concentration de la solution obtenue, de sorte à produire une poudre jaune, dite « Yellow cake », qui contient environ 75% d'oxyde d'uranium ;
- une étape de conversion de l'oxyde d'uranium en tétrafluorure d'uranium UF₄ puis en hexafluorure d'uranium UF₆ ;
- une étape d'enrichissement de l'hexafluorure d'uranium en uranium 235 ;
- une conversion de l'hexafluorure d'uranium enrichi en poudre d'oxyde d'uranium ; et
- une étape de compression de la poudre obtenue, pour former des pastilles suivie d'une étape de frittage pour les consolider.

La fission de l'uranium génère un certain nombre de radionucléides à vie longues, tels que le plutonium et des actinides mineurs, tels que l'américium et le curium. Le premier est recyclé comme matière fissile, les seconds sont destinés à être transmutés en radionucléides à vie courte.

Pour valoriser le plutonium, il a été mis au point un nouveau combustible qui incorpore l'oxyde de plutonium à l'oxyde d'uranium, ce nouveau combustible étant dénommé combustible MOX.

Plus précisément, ce combustible de type MOX comprend à la fois de l'oxyde d'uranium et de l'oxyde de plutonium, le plutonium étant créé par capture neutronique de l'uranium 238 dans les réacteurs nucléaires et donc issu du retraitement des combustibles irradiés, tandis que l'uranium est d'origine naturelle cette fois-ci.

Le combustible MOX est obtenu classiquement par deux voies :
- une première voie qui peut être qualifiée de « co-broyage direct », dans laquelle une poudre de UO₂ et une poudre de PuO₂ sont mélangées et co-broyées d'emblée dans les proportions voulues pour obtenir la teneur en plutonium spécifiée, c'est-à-dire la teneur en plutonium que présente le combustible en fin de fabrication ;
- une deuxième voie qui allie à la fois des étapes de broyage et de dilution, dans laquelle on constitue au départ un mélange primaire de poudre « surconcentré » en plutonium par rapport à la teneur en plutonium spécifiée, que l'on dilue secondairement par adjonction de dioxyde d'uranium.

Par rapport aux deux types de combustibles mentionnés ci-dessus et à leurs voies classiques de préparation, on peut observer qu'elles sont basées toutes deux sur la métallurgie des poudres, ce qui peut générer des problèmes de manipulation en milieu radioactif confiné.

Ainsi, les inventeurs se sont donc fixé comme objectif de proposer un procédé de préparation d'un combustible mixte comprenant, outre l'uranium, d'autres éléments actinides et/ou lanthanides, en particulier des actinides mineurs, tels que l'américium, le curium et le neptunium mettant en oeuvre notamment des étapes de mélange en voie liquide.

Ceci permettrait d'utiliser, directement notamment lorsque les éléments à incorporer sont des actinides mineurs, les effluents liquides comprenant lesdits actinides dans le cadre du procédé et d'éviter notamment la manipulation de poudres de ces éléments.

### EXPOSÉ DE L'INVENTION

Ainsi, l'invention a trait, selon un premier objet, à un procédé de préparation d'un combustible à base d'oxyde, de carbure et/ou d'oxycarbure comprenant de l'uranium et au moins un élément actinide et/ou lanthanide comprenant les étapes suivantes :
- une étape de préparation d'une solution de charge consistant en une solution nitrique comprenant ledit actinide et/ou lanthanide sous forme de nitrates d'actinide et/ou de lanthanide et l'uranium sous forme de complexe de nitrate d'uranyle hydroxylé ;
- une étape de passage de ladite solution sur une résine échangeuse de cations comprenant des groupes carboxyliques, moyennant quoi l'actinide et/ou le lanthanide sous forme cationique et l'uranium sous forme uranyle restent fixés à la résine ;
- une étape de traitement thermique de ladite résine de sorte à obtenir ledit combustible.

Ainsi, le procédé de l'invention est un procédé qui ne fait pas intervenir la technique de la métallurgie des poudres pour associer l'uranium à au moins un élément actinide et/ou lanthanide et les inconvénients en découlant mais utilise la capacité d'une résine échangeuse de cations comprenant des groupes carboxyliques à fixer à la fois des cations uranyle et des cations à base d'élément actinide et/ou lanthanide, la fixation se faisant par échange entre les protons portés par les groupes carboxyliques et les cations uranyles et les cations actinides et/ou lanthanides contenus dans la solution de charge.

Les inventeurs ont pu constater, de façon surprenante, que les résines susmentionnées ont la capacité de fixer, de manière groupée et congruente, les cations uranyles et les cations actinides et/ou lanthanides, sous réserve de respecter la condition que le complexe de nitrate d'uranyle doit être hydroxylé. La proportion entre les cations uranyles et ceux issus de l'élément actinide et/ou lanthanide de la solution de charge se retrouve ainsi dans la résine après passage de ladite solution, du fait de l'absence de sélectivité de celle-ci. Il est ainsi possible en préparant la solution de charge de prévoir les proportions d'éléments qui se retrouveront dans le combustible à l'issue du procédé.

Ce procédé présente également l'avantage de ne pas faire intervenir d'ions ammoniums, dont la gestion en milieu nucléaire peut être délicate. L'opération de recyclage des éluats s'en trouve ainsi facilitée.

Ce procédé s'applique à la préparation de combustibles, comprenant outre l'uranium, des actinides à l'état d'oxydation (III), (V) et (VI) ainsi qu'aux lanthanides à l'état d'oxydation (III).

Tout particulièrement, le procédé de l'invention peut s'appliquer à la préparation de combustibles, comprenant, outre l'uranium, au moins un actinide mineur, tel que l'américium, le curium et/ou le neptunium et les mélanges de ceux-ci. Dans ce cas de figure, les actinides mineurs peuvent provenir d'un flux de retraitement hydrométallurgique de combustible usé.

Encore plus particulièrement, le procédé de l'invention peut s'appliquer à la préparation de combustibles comprenant outre l'uranium, de l'américium (III) ou du néodyme (III).

Il est entendu que, lorsque les combustibles préparés conformément au procédé de l'invention sont destinés à être utilisés dans des réacteurs nucléaires en vue de produire de l'énergie, la proportion des éléments actinides et/ou lanthanides autres que l'uranium sera déterminée de sorte à ne pas nuire aux propriétés de l'élément fissible uranium.

La première étape du procédé consiste à préparer une solution de charge destinée à être passée sur une résine échangeuse de cations comprenant des groupes carboxyliques.

Cette solution de charge peut être préparée de la façon suivante :
- la préparation d'une première solution nitrique comprenant du nitrate dudit élément actinide et/ou lanthanide, par exemple une solution de nitrate de néodyme (III) ou d'américium (III) ;
- l'introduction d'une quantité prédéterminée d'oxyde d'uranium UO₃ ou éventuellement U₃O₈, dans ladite première solution, ladite quantité étant fixée de sorte à former un complexe de nitrate d'uranyle hydroxylé de formule UO₂(NO₃)₂₋ₓ(OH)ₓ avec x≤1, par exemple un complexe de nitrate d'uranyle hydrolysé à hauteur de 25% de formule UO₂(NO₃)_{1,5}(OH)_{0,5} ;
- une étape de mélange de la solution résultante, de préférence à température ambiante, suivie éventuellement d'une étape de filtration.

Selon une variante, la solution de charge peut être préparée par introduction dans une première solution comprenant du nitrate dudit élément actinide et/ou lanthanide et déjà du nitrate d'uranyle ou de l'acide nitrique, d'une quantité prédéterminée de trioxyde d'uranium de sorte à obtenir la quantité d'uranium souhaitée et un complexe de nitrate d'uranyle hydroxylé de formule UO₂(NO₃)₂₋ₓ(OH)ₓ avec x≤1.

Il importe que le cation uranyle se retrouve sous forme de complexe de nitrate d'uranyle hydroxylé, car il a été mis en évidence par les inventeurs que la présence de ce complexe constitue le moteur de l'échange entre la résine et les cations présents dans la solution de charge. La présence de ce complexe dans la solution de charge permet notamment de provoquer l'échange ionique concomitant des cations uranyles et des cations actinides et/ou lanthanides avec les protons de la résine échangeuse de cations, lors du passage de la solution de charge sur celle-ci.

Cette quantité prédéterminée de trioxyde d'uranium à introduire dans la première solution est fixée de sorte à ce que le rapport molaire entre le nombre de moles d'ions nitrates et le nombre de moles d'uranium soit inférieur à 2.

A titre d'exemple, pour un complexe de nitrate d'uranyle hydrolysée à hauteur de 25% de formule UO₂(NO₃)_{1,5}(OH)_{0,5}, l'équation de formation de ce complexe peut être la suivante :

3UO₂(NO₃)₂ + UO₃ + H₂O → 4UO₂(NO₃)_{1,5}(OH)_{0,5}

A titre d'exemple, pour obtenir un tel complexe, en partant d'une solution de nitrate d'américium contenant a moles d'acide nitrique, on pourra dissoudre (a/R) moles d'oxyde d'uranium, R étant le nombre de moles de nitrates attribué à l'uranium (soit 1,5 ici).

L'étape suivante consiste ensuite à faire passer la solution de charge sur une résine échangeuse de cations comprenant des groupes carboxyliques, de sorte à permettre la fixation des cations uranyles et des cations actinides et/ou lanthanides.

Les résines utilisées se présentent classiquement sous forme de perles polymères intégrant des groupes échangeables, dans notre cas des carboxylates portant des protons H⁺. Les résines utilisées dans le cadre de l'invention peuvent être des résines résultant de la (co)polymérisation de l'acide (méth)acrylique ou de l'acrylonitrile avec un agent de réticulation, notamment le divinylbenzène (DVB).

Dans le cas de l'acrylonitrile, il faudra prévoir, après polymérisation, une étape d'hydrolyse des groupes -CN en groupes carboxyliques.

Des résines commerciales pouvant être utilisées pour la mise en oeuvre du procédé de l'invention peuvent être les résines fournies par Rohm&Haas, telles que les résines IMAC HP 333.

La résine échangeuse de cations choisie peut être amenée à subir une ou plusieurs étapes de traitement avant passage de la solution de charge, parmi lesquelles on peut citer :
- une étape de calibrage, par voie humide, de sorte à isoler la fraction granulométrique désirée, par exemple, une fraction allant de 600 à 800 µm ;
- au moins une étape de lavage en mettant en oeuvre un cycle de traitement basique et acide avec de l'ammoniaque et de l'acide nitrique suivie d'une étape de rinçage à l'eau déminéralisée ;
- une étape de séchage après l'étape de rinçage ;
- une étape de tri de forme, de sorte à éliminer les particules brisées ou non sphériques, cette étape pouvant être réalisée sur une table inclinée.

On précise que l'étape de lavage susmentionnée a pour but de nettoyer la résine de toute présence de résidus de synthèse. Ainsi, la fixation d'un groupe ammonium par réaction de neutralisation du proton des groupes carboxyliques permet un gonflement de la résine propice à un meilleur accès des pores à l'eau de lavage. Le passage d'acide nitrique permet ensuite de remplacer les groupes ammoniums par des protons H⁺ pour rétablir les groupes carboxyliques.

La résine, éventuellement traitée si besoin est, est ensuite avantageusement humidifiée généreusement et placée dans une colonne pour former un lit de particules de résine destiné à recevoir la solution de charge.

L'étape de passage de la solution de charge sur la résine consiste classiquement à la laisser écouler, par percolation, à travers le lit et à récupérer en sortie du lit un éluat. Au cours de ce passage, la résine comprenant des groupes carboxyliques échange progressivement ses protons contre les cations uranyles et les cations de l'élément actinide et/ou lanthanide. Le pH de l'éluat diminue brusquement, lorsque débute l'échange avec la résine sous forme proton (c'est-à-dire comprenant des groupes carboxyliques -COOH). Il remonte ensuite progressivement jusqu'à retrouver la valeur du pH de la charge d'entrée, ce qui signifie que l'échange est terminé et que la résine se trouve saturée en cations métalliques. On peut ainsi stopper le passage de la solution de charge sur la résine. En d'autres termes, on procède au passage sur la résine de la solution de charge jusqu'à obtention d'un éluat présentant une concentration identique à celle de la solution de charge.

L'éluat récupéré au cours du procédé peut être amené à subir une étape de recyclage, par exemple, en ajustant l'acidité de cet éluat par ajout d'acide nitrique, en dissolvant éventuellement dans la solution de l'oxyde d'uranium et en complétant par une solution de nitrate d'actinide et/ou de lanthanide si besoin est, de sorte à constituer une nouvelle solution de charge, destinée à être passée sur la résine.

Après l'étape de passage, le procédé de l'invention peut comprendre une étape de lavage de la résine avec de l'eau déminéralisée, notamment en vue de chasser la charge restante dans les pores de la résine.

Le procédé peut comprendre une étape de séchage de la résine à une température aux environs de 100°C, par exemple à 105°C, de sorte à provoquer l'évaporation de l'eau présente dans les pores de la résine.

Selon l'invention, la résine complexée est ensuite amenée à subir un traitement thermique à une température efficace pour former un oxyde, un carbure et/ou un oxycarbure comprenant de l'uranium et au moins un élément actinide et/ou lanthanide.

Ce traitement comprend classiquement une étape de carbonisation destinée à éliminer le squelette organique de la résine, cette étape de carbonisation pouvant se dérouler à une température pouvant aller jusqu'à 1000°C, cette étape pouvant être réalisée sous air si l'on veut totalement éliminer le carbone ou sous atmosphère inerte si l'on veut conserver une partie du carbone. Cette carbonisation est classiquement réalisée dans un four tubulaire. A l'issue de cette étape, le combustible se présente classiquement soit sous forme d'oxyde soit sous forme d'un mélange intime d'oxyde métallique et de carbone.

Après l'étape de carbonisation peut s'ensuivre une étape de réduction (pouvant être qualifiée de réduction carbothermique) de sorte à transformer, le cas échéant, la partie oxyde mélangée au carbone obtenue à l'issue de l'étape de carbonisation sous atmosphère inerte en carbure et/ou oxycarbure.

Cette étape de réduction peut être opérée de deux façons :
- soit en chauffant au-delà de la température de carbonisation, par exemple à une température allant de 1600 à 1800°C, moyennant quoi l'on obtient un dégagement de monoxyde de carbone, ce monoxyde de carbone réduisant l'oxyde en carbure et étant avantageusement éliminé par balayage avec un gaz inerte ;
- soit en chauffant le matériau obtenu par carbonisation sous gaz inerte en atmosphère réductrice, par exemple, de l'hydrogène.

Le combustible obtenu se présente, généralement, sous forme de microsphères, pouvant être mis en forme sous le format approprié selon les applications envisagées.

L'invention a également trait, selon un deuxième objet, à un combustible susceptible d'être obtenu par le procédé de l'invention.

Ce combustible peut être destiné à être utilisé dans des réacteurs nucléaires en vue de produire de l'énergie par fission de l'uranium. Dans ce cas, la proportion des éléments actinides et/ou lanthanides autres que l'uranium est déterminée de sorte à ne pas nuire aux propriétés de l'élément fissible uranium. Cette proportion peut aller classiquement jusqu'à 20% atomique par rapport au nombre total d'atomes du combustible.

Outre le fait que le combustible de l'invention puisse être utilisé comme combustible dans des réacteurs destinés à produire de la chaleur apte à générer de l'électricité, le combustible de l'invention peut être également utilisé comme cibles de transmutation, de sorte à pouvoir effectuer des expériences de transmutation, en vue d'utiliser, dans le futur, cette technique pour la gestion notamment des actinides mineurs.

D'autres caractéristiques et avantages de l'invention apparaîtront mieux à la lecture du complément de description qui suit, lequel se rapporte à des exemples de fabrication de combustibles mixtes comprenant de l'uranium et de l'américium (III) (Exemple 1) ou comprenant de l'uranium et du néodyme (III) (Exemple 2).

Bien entendu, les exemples qui suivent ne sont donnés qu'à titre d'illustration de l'objet de l'invention et ne constituent en aucun cas une limitation de cet objet.

### BRÈVE DESCRIPTION DES DESSINS

La figure 1 correspond à un graphique du type thermogramme représentant l'évolution de la perte de masse P (en %) en fonction de la température de carbonisation appliquée T (en °C) sous air de la résine chargée conformément à l'exemple 1.
La figure 2 correspond à un graphique du type thermogramme représentant l'évolution de la perte de masse P (en %) en fonction de la température de carbonisation appliquée T (en °C) sous argon de la résine chargée conformément à l'exemple 1.
La figure 3 correspond à une photographie prise au microscope électronique à balayage montrant la microstructure du combustible obtenue après carbonisation de la résine sous argon à 900°C conformément à l'exemple 1.
La figure 4 correspond à un graphique illustrant l'évolution du pH de l'éluat en fonction du volume V (en mL) de la solution de charge passée sur la résine (courbe a) ainsi que l'évolution de la concentration C (en mol/L) en U (VI) et Nd (III) de l'éluat en fonction du volume V de solution de charge passée sur la résine (respectivement courbes b et c) conformément à l'exemple 2.
La figure 5 représente un graphique du type diffractogramme aux rayons X représentant l'intensité I en fonction de l'angle 2θ (en °) pour un combustible obtenu par calcination d'une résine sous air conformément à l'exemple 2.
La figure 6 représente un graphique du type diffractogramme aux rayons X représentant l'intensité I en fonction de l'angle 2θ (en °) pour un combustible obtenu par calcination d'une résine sous argon conformément à l'exemple 2.
La figure 7 représente différents clichés (a, b, c et d) d'une cartographie d'une coupe équatoriale d'une microsphère de combustible obtenue par carbonisation d'une résine sous argon conformément à l'exemple 2.

### EXPOSÉ DÉTAILLÉ DE MODES DE RÉALISATION PARTICULIERS

### EXEMPLE 1

Cet exemple illustre la préparation d'un combustible oxyde mixte comprenant à la fois de l'uranium et de l'américium (III), cette préparation comprenant les étapes suivantes :
- la préparation d'une solution de charge comprenant un nitrate d'uranyle hydroxylée et du nitrate d'américium (III) ;
- le passage de cette solution de charge sur une colonne comprenant une résine échangeuse de cations : une résine carboxylique IMAC HP333 de la société Rohm and Haas ;
- le traitement thermique de la résine chargée en cations uranyles et cations américium (III).

### a) Préparation de la solution de charge

On veut préparer une solution de charge comprenant du nitrate d'uranyle hydroxylé UO₂(NO₃)_{1,1}(OH)_{0,9} et du nitrate d'américium Am(NO₃)₃.

Pour ce faire, on part d'une solution de nitrate d'américium de concentration 0,011 mol/L contenant 1,22 mmoles d'acide nitrique, le volume de la solution étant de 10 mL. A cette solution, on ajoute de l'oxyde d'uranium UO₃ à hauteur de 1,1 mmol.

Le nombre de moles d'oxyde uranium n_{UO3} à ajouter est évalué par la formule empirique suivante :

n_{UO3} = (a/R')

avec a correspondant au nombre de moles d'acide nitrique contenu dans la solution de départ et R' correspondant au nombre de nitrates attribué à l'uranium, à savoir ici 1,1, R' pouvant être calculé, en d'autres termes, par la formule suivante :

R'= ([NO₃⁻] - 3[Am³⁺]) / [UO₂²⁺]

On obtient ainsi une solution comprenant UO₂(NO₃)_{1,1}(OH)_{0,9} (0,11 mol/L) et Am(NO₃)₃ (0,011 mol/L). Le pH final obtenu est égal à 3,7.

### b) Passage sur la colonne

La résine sélectionnée est une résine échangeuse de cations comportant des groupes échangeables carboxyliques : IMAC HP 333 fabriquée par Rohm and Haas. Cette résine présente une capacité volumique de 4 méq/mL et une cinétique d'échange comparable aux résines macroporeuses.

La résine est triée préalablement par voie humide sur un tamis selon trois tranches granulométriques : 400-600 µm, 600-800 µm et 800-1000 µm. Un cycle de lavage approfondi (ammoniaque, acide nitrique et eau) est alors opéré sur la tranche sélectionnée (600-800 µm), afin d'éliminer les résidus de synthèse et les impuretés cationiques encore présents.

La résine ainsi traitée est ensuite séchée puis triée de nouveau sur une table inclinée, de sorte à éliminer les particules brisées ou non sphériques.

Une fois ce dernier tri effectué, les particules de résines sont réhumidifiées avec de l'eau déminéralisée puis introduites dans une colonne pour former un lit. Il s'agit d'une colonne de verre de marque Bio-Rad de 5 cm de hauteur et de diamètre intérieur de 0,5 cm. La hauteur du lit est d'environ 2,5 cm.

La solution de charge préparée préalablement (volume : 10 mL) est ensuite passée à travers le lit de particules de résine à température ambiante.

La résine carboxylique échange progressivement ses protons contre les cations uranyle et américium (III).

Le pH de l'éluat diminue brusquement lorsque débute l'échange avec la résine. Il remonte ensuite progressivement jusqu'à retrouver après l'équivalence la valeur de pH de la solution de charge à l'entrée de la colonne. La fixation se déroule de façon congruente, car le rapport uranium/américium (III) évolue peu dans l'éluat, la résine ne montrant pas de sélectivité pour ce couple de cations. Le fait que le rapport entre Am et U reste constant dans l'éluat au fur et à mesure de la fixation apporte la preuve de la congruence de la réaction d'échange pour le couple Am/U.

A partir du moment où l'éluat est identique à la solution de charge entrant dans la colonne, on peut considérer que l'échange est terminé et que la résine se trouve saturée en cations métalliques.

Ensuite, la résine présente dans la colonne est lavée à l'eau déminéralisée pour chasser la charge restante dans les pores de celle-ci, essorée par passage de courant d'air puis finalement séchée à l'étuve à 105°C.

Dans cet exemple, la charge est un mélange U/Am 90/10 en atome et la capacité utile de la résine atteint 40% de la capacité d'échange maximale soit 4 méq/g sec de résine. L'équation bilan de l'échange ionique peut ainsi se résumer à :

9UO₂(NO₃)_{1,1,}(OH)_{0,9} + Am(NO₃)₃ + 21RH → R₂₁(UO₂)₉Am + 8,1 H₂O + 12,9 HNO₃

RH représentant la résine échangeuse de protons.

La teneur en masse de métal dans la résine chargée et séchée s'élève à 34%, réparti en 31% pour l'uranium et 3% pour l'américium. La formulation de la résine peut s'écrire approximativement, sachant que le motif R a une masse molaire de 80 g/mol environ et comporte 3 C (en partant du motif issu de l'acide acrylique) :

R₅₂U₉AmO₁₈H₃₁ ou (RH)₃₁(R₂₁(UO₂)₉Am)

ce qui permet d'évaluer le rapport C/(Am+U) entre 15 et 16.

La carbonisation de la résine est effectuée sous air ou sous atmosphère inerte.

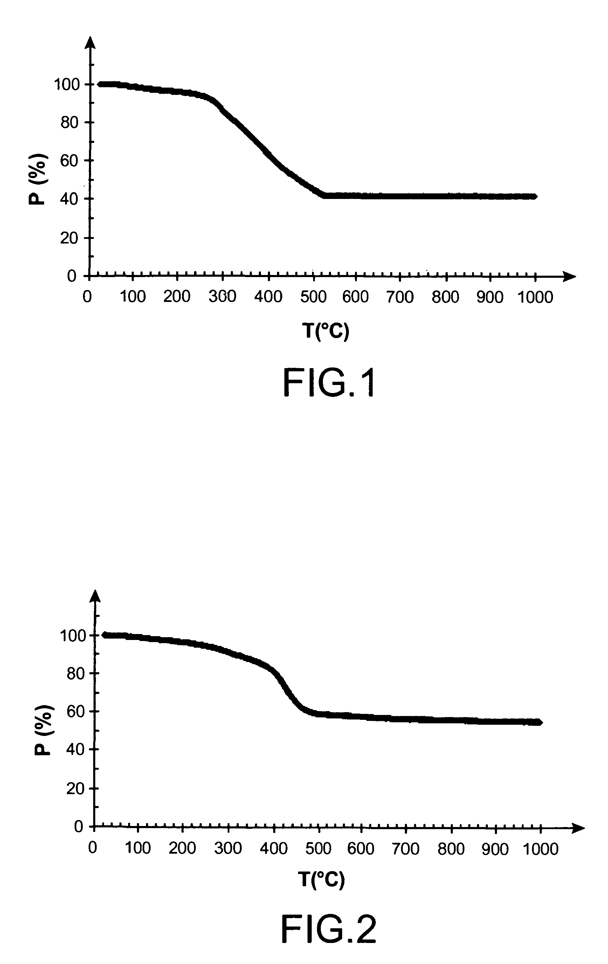

Comme il apparaît sur la figure 1, qui représente un thermogramme pour un traitement par carbonisation sous air, l'essentiel de la réaction se produit entre 200 et 500°C, le gradient de température entre 200 et 500°C étant fixé entre 2 et 5°C/min. Au-delà de 500°C et jusqu'à 1000°C, le gradient de température appliqué va de 5 à 10°C/min.

Pour le traitement de carbonisation sous air, la perte de masse mesurée entre 20 et 1000°C est de l'ordre de 60%, ce qui est conforme à la réaction suivante :

R₅₂U₉AmO₁₈H₃₁ → (U₃O₈)₃AmO₂

ce qui donne, par calcul, 41% de masse résiduelle après calcination.

En ce qui concerne le traitement de carbonisation sous atmosphère inerte (en l'occurrence ici, l'argon), il apparaît également, comme représenté sur le thermogramme de la figure 2, que l'essentiel de la réaction se produit entre 200 et 500°C, le gradient de température entre 200 et 500°C étant fixé entre 2 et 5°C/min. Au-delà de 500°C et jusqu'à 1000°C, le gradient de température appliqué va de 5 à 10°C/min.

Pour ce type de traitement, la perte de masse mesurée entre 20 et 1000°C est proche de 45%. Elle correspond à la réaction suivante :

R₅₂U₉AmO₁₈H₃₁ → (UO₂)₂AmO₂ + nC

La perte de masse expérimentale permet alors de remonter à la quantité de carbone résiduelle et de calculer le rapport C/métal : n=9. Ce rapport peut être optimisé si on sature davantage la résine en allongeant le temps du contact.

Une phase dioxyde d'uranium légèrement sur-stoechiométrique de structure cubique est formée associée à une phase de dioxyde d'américium.

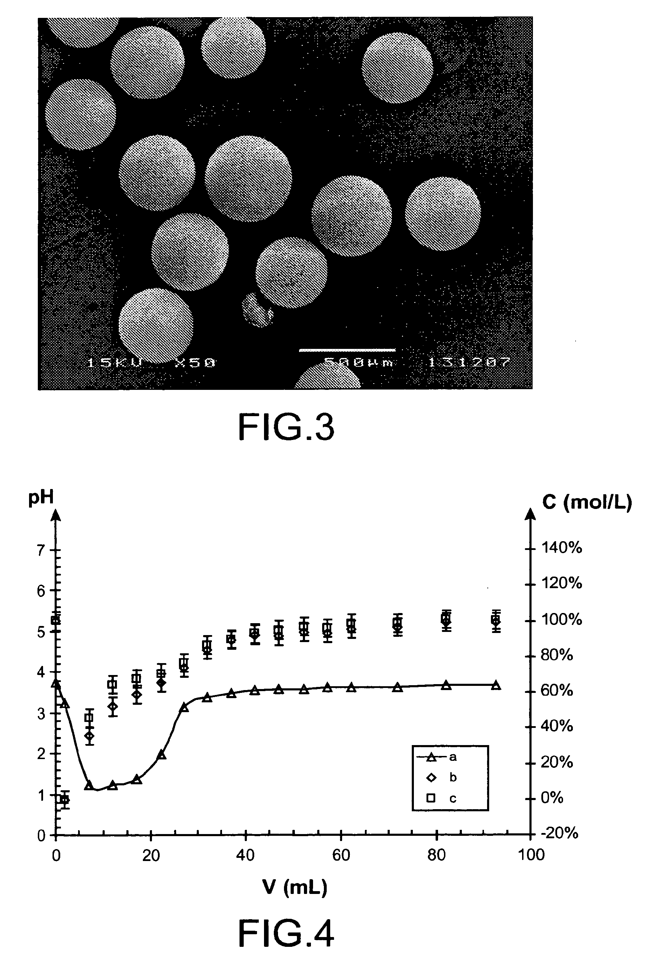

La morphologie de la résine, initialement sphérique, est conservée tout au long du traitement. La figure 3 représente un cliché pris du produit obtenu après traitement à 900°C sous argon de la résine chargée. On peut observer, sur ce cliché, des microsphères d'un mélange intime de dioxyde d'uranium, de dioxyde d'américium pris dans une matrice carboné. Le mélange peut être transformé en carbure ou oxycarbure en chauffant à de plus hautes températures voire en présence d'un réducteur.

### EXEMPLE 2

Cet exemple illustre la préparation d'un oxyde mixte comprenant à la fois de l'uranium et du néodyme, cette préparation comprenant les étapes suivantes :
- la préparation d'une solution de charge comprenant un nitrate d'uranyle hydroxylé et du nitrate de néodyme ;
- le passage de cette solution sur une colonne comprenant une résine échangeuse de cations : une résine carboxylique IMAC HP333 de la société Rohm and Haas ;
- le traitement thermique de la résine chargée en ions uranyles et ions néodymes.

### a) Préparation de la solution de charge

On veut préparer une solution de charge comprenant du nitrate d'uranyle hydroxylé UO₂(NO₃)_{1,0}(OH)_{1,0} et du nitrate de néodyme Nd(NO₃)₃.

Pour ce faire, on part de 90 mL d'une solution aqueuse de nitrate de néodyme à 0,05 mol/L et de nitrate d'uranyle à 0,1 mol/L, dans laquelle on dissout 9 mmoles moles d'oxyde d'uranium UO₃.

Le nombre de moles d'oxyde d'uranium n_{UO3} à dissoudre est évalué par la formule empirique suivante :

n_{UO3} = [UO₂]ᵢₙᵢₜᵢₐₗₑR'V

avec [UO₂]ᵢₙᵢₜᵢₐₗₑ correspondant à la concentration de nitrate d'uranyle de départ, V le volume et R' correspondant au nombre de nitrates attribué à l'uranium, à savoir ici 1, R' pouvant être calculé, en d'autres termes, par la formule suivante :

R'= ([NO₃⁻]-3[Nd³⁺])/[UO₂²⁺]

On obtient ainsi, après ajout d'un excès de UO₃ puis filtration, une solution comprenant du nitrate de néodyme Nd(NO₃)₃ (0,05 mol/L) et un complexe UO₂(NO₃)_{1,0}(OH)_{1,0} (0,2 mol/L). Le pH atteint est de 3,7.

### b) Passage sur la colonne

La résine sélectionnée est une résine échangeuse de cations comportant des groupes échangeables carboxyliques : IMAC HP 333 fabriquée par Rohm and Haas. Cette résine présente une capacité volumique de 4 méq/mL et une cinétique d'échange comparable aux résines macroporeuses.

La résine ne pouvant être utilisée en tant que telle, l'on précède à un tri granulométrique et à des cycles de lavage approfondi.

La tranche granulométrique sélectionnée est 800-1000 µm dans ce cas.

La résine ainsi traitée est ensuite séchée puis triée de nouveau sur une table inclinée, de sorte à éliminer les particules brisées ou non sphériques.

Une fois ce dernier tri effectué, les particules de résines sont réhumidifiées avec de l'eau déminéralisée puis introduites dans une colonne pour former un lit. La colonne est de marque Bio-Rad et est en verre avec un diamètre intérieur de 0,7 cm et une hauteur utile de 10,5 cm. La hauteur du lit est de 8,5 cm environ.

La solution de charge préparée préalablement (volume de 100 mL) est ensuite passée à travers le lit de particules de résine à température ambiante.

La résine carboxylique échange progressivement ses protons contre les ions uranyle et néodyme (III) comme le montre la figure 4. Comme apparent sur cette figure, le pH de l'éluat diminue brusquement, lorsque débute l'échange avec la résine.

Il remonte ensuite progressivement jusqu'à retrouver après l'équivalence la valeur de pH de la solution de charge à l'entrée de la colonne. La fixation se déroule de façon congruente, car le rapport uranium/néodyme (III) évolue peu dans l'éluat mesuré à différents intervalles, la résine ne montrant pas de sélectivité pour ce couple de cations.

A partir du moment où l'éluat devient identique à la charge, on peut considérer que l'échange est achevé et que la résine se trouve saturée en cations métalliques.

Ensuite, la résine présente dans la colonne est lavée à l'eau déminéralisée pour chasser la charge restante dans les pores de celle-ci, essorée puis séchée à l'étuve à 105°C.

Dans cet exemple, la charge correspond à un mélange U/Nd de 80 :20 en atome. La capacité utile de la résine approche alors 60% de la capacité d'échange ionique soit 7 méq/g sec de résine.

L'équation bilan de l'échange ionique peut ainsi se résumer à :

4 UO₂(NO₃)_{1,0}(OH)_{1,0} + Nd(NO₃)₃ + 11RH → R₁₁(UO₂)₄Nd + 4H₂O + 7HNO₃

RH représentant la résine échangeuse de protons.

La teneur en masse de métal dans la résine chargée et séchée s'élève à 37%, réparti en 33% pour l'uranium et 4% pour le néodyme. La formulation de la résine peut s'écrire approximativement :

R₂₁U₄NdO₈H₁₀ ou (RH)₁₀(R₁₁(UO₂)₄Nd)

ce qui permet d'évaluer le rapport C/(Nd+U) autour de 12.

### C) Traitement thermique

La carbonisation de la résine est effectuée sous air ou sous atmosphère inerte.

Il apparaît que l'essentiel de la réaction se produit entre 200 et 500°C, le gradient de température entre 200 et 500°C étant fixé entre 2 et 5°C/min. Au-delà de 500°C et jusqu'à 1000°C, le gradient de température appliqué va de 5 à 10°C/min.

Pour le traitement de carbonisation sous air, le bilan de la carbonisation est conforme à la réaction suivante :

R₂₁U₄NdO₈H₁₀ → (U₃O₈)_{4/3}(Nd₂O₃)_{1/2}

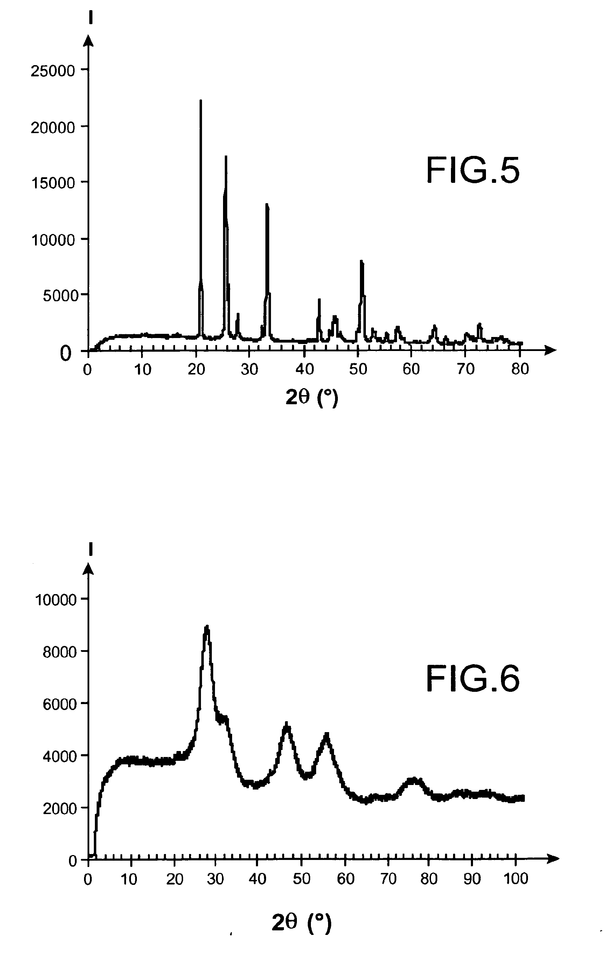

La forme carbonisée sous air a été étudiée par diffraction des rayons X. Comme il apparaît sur la figure 5, les raies observées correspondent à une phase uranium U₃O₈ mêlée à une phase Nd₂O₃ de structure cubique. La phase U₃O₈ peut être transformée en phase UO₂ par traitement en température sous atmosphère réductrice H₂-Argon.

Pour le traitement de carbonisation sous argon, une phase mixte de dioxyde d'uranium UO₂ légèrement sur-stoechiométrique de structure cubique et de sesquioxyde de néodyme Nd₂O₃ de même structure cubique se forme, comme l'atteste le diffractogramme représenté sur la figure 6 caractéristique d'une structure cubique unique.

La morphologie de la résine, initialement sphérique, est conservée tout au long du traitement.

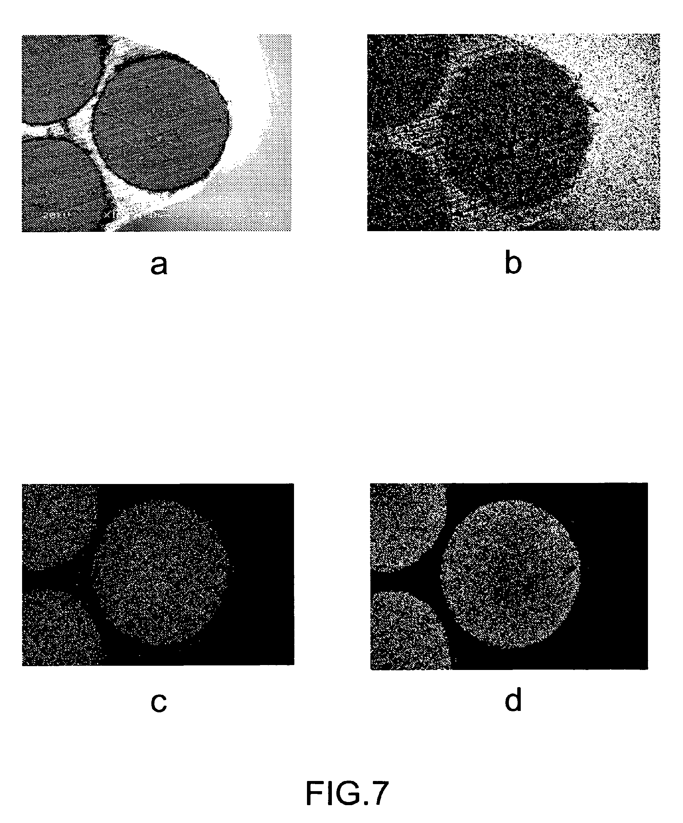

La figure 7 représente différents clichés (a, b, c et d) d'une cartographie d'une coupe équatoriale d'une microsphère de combustible obtenue par carbonisation d'une résine sous argon conformément à ce qui est décrit ci-dessous.

Le cliché « a » est une vue d'ensemble de la coupe de la microsphère. Les clichés « b », « c » et « d » représentent respectivement le signal en analyse microsonde par fluorescence X des éléments carbone, néodyme et uranium. A la vue de l'égalité de l'intensité du signal de fluorescence au coeur de la microsphère, on peut déduire que la répartition des cations métalliques dans la matrice carbone est homogène.

## Revendications

1. Procédé de préparation d'un combustible nucléaire à base d'oxyde, de carbure et/ou d'oxycarbure comprenant de l'uranium et au moins un élément actinide et/ou lanthanide comprenant les étapes suivantes :
- une étape de préparation d'une solution de charge consistant en une solution nitrique comprenant ledit actinide et/ou lanthanide sous forme de nitrates d'actinide et/ou de lanthanide et l'uranium sous forme de complexe de nitrate d'uranyle hydroxylé ;
- une étape de passage de ladite solution sur une résine échangeuse de cations comprenant des groupes carboxyliques, moyennant quoi l'actinide et/ou le lanthanide sous forme cationique et l'uranium sous forme uranyle restent fixés à la résine ;
- une étape de traitement thermique de ladite résine de sorte à obtenir ledit combustible nucléaire.

2. Procédé selon la revendication 1, dans lequel l'élément actinide est un actinide à l'état d'oxydation (III), (V) ou (VI) et l'élément lanthanide est un lanthanide à l'état d'oxydation (III).

3. Procédé selon la revendication 1 ou 2, dans lequel l'élément actinide est un actinide mineur choisi parmi l'américium, le curium, le neptunium et les mélanges de ceux-ci.

4. Procédé selon la revendication 3, dans lequel l'élément actinide mineur provient d'un flux de retraitement de combustible usé.

5. Procédé selon l'une quelconque des revendications précédentes, dans lequel l'étape de préparation de la solution de charge comprend :
- la préparation d'une première solution nitrique comprenant du nitrate dudit élément actinide et/ou lanthanide ;
- l'introduction d'une quantité prédéterminée d'oxyde d'uranium UO₃ ou éventuellement U₃O₈, dans ladite première solution, ladite quantité étant fixée de sorte à former un complexe de nitrate d'uranyle hydroxylée de formule UO₂(NO₃)₂₋ₓ(OH)ₓ avec x≤1 ;
- une étape de mélange de la solution résultante, de préférence à température ambiante, suivie éventuellement d'une étape de filtration.

6. Procédé selon l'une quelconque des revendications 1 à 4, dans lequel l'étape de préparation de la solution de charge consiste à introduire dans une première solution comprenant du nitrate dudit élément actinide et/ou lanthanide et déjà du nitrate d'uranyle, une quantité prédéterminée de trioxyde d'uranium fixée de sorte à former un complexe de nitrate d'uranyle hydroxylée de formule UO₂(NO₃)₂₋ₓ(OH)ₓ avec x≤1.

7. Procédé selon la revendication 5 ou 6, dans lequel la quantité prédéterminée de trioxyde d'uranium à introduire dans la première solution est déterminée de sorte à ce que le rapport molaire entre le nombre de moles d'ions nitrates et le nombre de moles d'uranium soit inférieure à 2.

8. Procédé selon l'une quelconque des revendications précédentes, dans lequel la résine est une résine résultant de la (co)polymérisation de l'acide (méth)acrylique ou de l'acrylonitrile avec un agent de réticulation.

9. Procédé selon l'une quelconque des revendications précédentes, dans lequel la résine, avant l'étape de passage de la solution de charge, subit une ou plusieurs des étapes suivantes:
- une étape de calibrage, par voie humide, de sorte à isoler la fraction granulométrique désirée, par exemple, une fraction allant de 600 à 800 µm ;
- au moins une étape de lavage en mettant en oeuvre un cycle de traitement basique et acide avec de l'ammoniaque et de l'acide nitrique suivie d'une étape de rinçage à l'eau déminéralisée ;
- une étape de séchage après l'étape de rinçage ;
- une étape de tri de forme, de sorte à éliminer les particules brisées ou non sphériques.

10. Procédé selon l'une quelconque des revendications précédentes, dans lequel l'étape de passage de la solution de charge est réalisée par percolation de celle-ci sur la résine.

11. Procédé selon l'une quelconque des revendications précédentes, dans lequel l'étape de passage sur la résine de la solution de charge est réalisée jusqu'à obtention d'un éluat présentant une concentration identique à celle de la solution de charge.

12. Procédé selon l'une quelconque des revendications précédentes, dans lequel l'étape de traitement thermique comprend une étape de carbonisation à une température pouvant aller jusqu'à 1000°C, cette étape pouvant être réalisée sous air ou sous atmosphère inerte.

13. Procédé selon la revendication 12, dans lequel l'étape de traitement thermique comprend une étape de réduction du matériau obtenu après l'étape de carbonisation, de sorte à obtenir un carbure et/ou oxycarbure mixte comprenant de l'uranium et au moins un élément actinide et/ou lanthanide.

## Claims

1. A method for preparing a fuel based on oxide, carbide and/or oxycarbide comprising uranium and at least one actinide and/or lanthanide element, comprising the following steps:
- a step for preparing a load solution consisting in a nitric solution comprising said actinide and/or lanthanide in the form of actinide and/or lanthanide nitrate and uranium as a complex of hydroxylated uranyl nitrate;
- a step for passing said solution over a cation exchange resin comprising carboxylic groups, with which the actinide and/or the lanthanide in a cationic form and uranium in the uranyl form remain bound to the resin;
- a heat treatment step of said resin so as to obtain said fuel.

2. The method according to claim 1, wherein the actinide element is an actinide in the oxidation state (III), (V) or (VI) and the lanthanide element is a lanthanide in the oxidation step (III).

3. The method according to claim 1 or 2, wherein the actinide element is a minor actinide selected from americium, curium, neptunium and mixtures thereof.

4. The method according to claim 3, wherein the minor actinide elements stems from a flow for reprocessing used fuel.

5. The method according to any of the preceding claims, wherein the step for preparing the load solution comprises:
- preparation of a first nitric solution comprising nitrate of said actinide and/or lanthanide element;
- introduction of a pre-determined amount of uranium oxide UO₃ or optionally U₃O₈, into said first solution, said amount being set so as to form a hydroxylated uranyl nitrate complex of formula UO₂(NO₃)₂₋ₓ(OH)ₓ with x≤1.
- a step for mixing the resulting solution, preferably at room temperature, optionally followed by a filtration step.

6. The method according to any of claims 1 to 4, wherein the step for preparing the load solution consists of introducing into a first solution comprising nitrate of said actinide and/or lanthanide element and already uranyl nitrate, a predetermined amount of uranium trioxide bound so as to form a hydroxylated uranyl nitrate complex of formula UO₂(NO₃)₂₋ₓ(OH)ₓ with x≤1.

7. The method according to claim 5 or 6, wherein the predetermined amount of uranium trioxide to be introduced into the first solution is determined so that the molar ratio between the number of moles of nitrate ions and the number of moles of uranium is less than 2.

8. The method according to any of the preceding claims, wherein the resin is a resin resulting from (co)polymerization of (meth)acrylic acid or acrylonitrile with a cross-linking agent.

9. The method according to any of the preceding claims, wherein the resin, before the step for passing the load solution over it, undergoes one or more of the following steps:
- a wet calibration step, so as to isolate the desired grain size fraction, for example, a fraction ranging from 600 to 800 µm;
- at least one washing step by applying a basic and acid treatment cycle with ammonia and nitric acid followed by a rinsing step with demineralized water;
- a drying step after the rinsing step;
- a shape-sorting step so as to remove broken or non-spherical particles.

10. The method according to any of the preceding claims, wherein the step for passing the load solution is carried out by percolation of the latter over the resin.

11. The method according to any of the preceding claims, wherein the step for passing the load solution over the resin is carried out until an eluate is obtained, having a concentration identical with that of the load solution.

12. The method according to any of the preceding claims, wherein the heat treatment step comprises a carbonization step at a temperature which may range up to 1000°C, this step may be carried out in air or under an inert atmosphere.

13. The method according to claim 12, wherein the heat treatment step comprises a step for reducing the material obtained after the carbonization step, so as to obtain a mixed carbide and/or oxycarbide comprising uranium and at least one actinide and/or lanthanide element.

## Patentansprüche

1. Verfahren zum Herstellen eines Kernbrennstoffs auf Oxyd-, Karbid-, und/oder Oxykarbidbasis, der Uran und wenigstens ein Actiniden- und/oder Lanthanidenelement enthält, das Verfahren umfassend die folgenden Verfahrensschritte bzw. -stufen:
- eine Stufe der Herstellung einer Chargen- bzw. Ausgangs-oder Beschickungslösung, welche aus einer stickstoffhaltigen bzw. salpetrigen Lösund bestehr, die das genannte Actinid und/oder Lanthanid in Form von Actinid- und/oder Lanthanidnitraten und/oder das Uran in Form eines hydroxylierten Uranylkomplexes enthält;
- eine Stufe des Passierens der genannten Lösung auf bzw. durch ein Karboxylgruppen enthaltendes Kationentauscher-Harz, vermittels welchem das Actinid und/oder das Lanthanid in kationischer Form und das Uran in Uranylform an dem Harz fixiert bleiben;
- eine Stufe der Wärmebehandlung des Harzes, bis zum Erhalt des Kernbrennstoffs.

2. Verfahren nach Anspruch 1, bei welchem das Actinidelement ein Actinid im Oxydationszustand (III), (IV) oder (VI) und das Lamthanidelement ein Lanthanid im Oxydationszustand (III) sind.

3. Verfahren nach Anspruch 1 oder 2, bei welchem das Actinid element ein aus der Gruppe Americium, Curium, Neptunium und Gemischen dieser ausgewähltes mineralisches bzw. bergmännisches Actinid ist.

4. Verfahren nach Anspruch 3, bei welchem das mineralische Actinidelement aus einem Fluß einer Wiederaufarbeitung eines verbrauchten Brennstoffs stammt.

5. Verfahren nach einem beliebigen der vorhergehenden Ansprüche, bei welchem die Stufe der Herstellung der Chargen-bzw. Ausgangs-bzw. Beschickungslösung umfasst:
- Herstellen einer ersten stickstoffhaltigen bzw. salpetrigen Lösung, welche ein Nitrat des genannten Actiniden- und/oder Lanthanidelements enthält;
- Einbringen einer vorbestimmten Menge von Uranoxyd U03 oder gegebenenfalls U3 08 in die genannte erste Lösung, wobei die genannte Menge so fixiert ist, dass ein hydrolixierter Uranylnitratkomplex der Formel UO₂(NO₃)₂₋ₓ(OH)ₓ mit xú1 gebildet wird;
- eine Stufe des Mischens der erhaltenen Lösung, vorzugsweise bei Umgebungstemperatur, mit eventuell nachfolgender Filtrationsstufe.

6. Verfahren nach einem beliebigen der Ansprüche 1 bis 4, bei welchem die Stufe der Herstellung der Chargen-bzw. Ausgangs- bzw. Beschickungslösung darin besteht, dass man in eine erste Lösung, welche Nitrat des genannten Aktiniden- und/oder Lanthanidenelements und bereits Uranylnitrat enthält, eine vorbestimmte Menge Urantrioxyd so
fixiert einbringt, dass ein hydrolixierter Uranylnitratkomplex der Formel UO₂(NO₃)₂₋ₓ (OH) x mit xú1 gebildet wird..

7. Verfahren nach Anspruch 5 oder 6, bei welchem die in die erste Lösung einzubringende vorbestimmte Menge Urantrioxyd so bestimmt wird, dass das Molverhältnis zwischen der Anzahl Mol von Nutrationen und der Anzahl Mol Uran kleiner als 2 ist.

8. Verfahren nach einem beliebigen der vorhergehenden Ansprüche, bei welchem das Harz ein aus der (Co)Polymerisation von Methacrylsäure oder von Acrylonitril mit einem Vernetzungsmittel resultierendes Harz ist.

9. Verfahren nach einem beliebigen der vorhergehenden Anspruche, bei welchem das Harz vor der Stufe des Passierens der Chargenlösung einer oder mehreren der folgenden Stufen unterzogen wird:
- einer Kalibrierstufe auf feuchtem Wege, dass die gewünsche granulometrische Fraktion, beispielsweise eine Fraktion von 600 bis 800 µm, isoliert wird;
- wenigstens einer Waschstufe mittels Ausführung eines basischen und sauren Behandlungszyklus mit Ammoniak und Salpetersäure, mit nachfolgender Spielstufe mit entmineralisiertem Nasser;
- einer Trocknungsstufe nach der Spülstufe;
- einer Formsortierungsstufe, zu Eliminierung von gebrochenen oder nichtsphäruschen Teilchen.

10. Verfahren nach einem beliebigen der vorhergehenden Ansprüche, bei welchem die Stufe des Passierens der Chargem- bzw. Ausgangs- bzw. Beschickungslösung mittels Percolation bzw. Träufeln der Lösung auf das Harz erfolgt.

11. Verfahren nach einem beliebigen der vorhergehenden Ansprüche, bei welchem die Stufe des Passierens der Chargenlösung über bzw. durch das Harz bis zum Erhalt eines Eluats ausgeführt wird, das eine mit der Konzentratio der Chargenlösung übereinstimmende Konzentration aufweist.

12. Verfahren nach einem beliebigen der vorhjergehenden Anbsprüche, bei welchem die Wärmebhandlungsstufe eine Karbonisierungs- bzw. Verkohlungsstufe bei einer Temperatur umfasst, die bis 1000 °C reichen kann, wobei diese Stufe an Luft oder unter einer inerten Atmosphäre erfolgen kann.

13. Verfahren nach Anspruch 12, bei welchem die Wärmebehandlungsstufe eine Stufe der Reduktion des nach der Karbonisierungsstufe erhaltenen Materials umfasst, derart dass ein Uran und wenigstens ein Aktiniden- und/oder ein Lanthanidenelement enthaltendes Mischkarbid und oder Mischoxykarbid erhalten wird.
